(19) Europäisches Patentamt
European Patent Office
Office européen des brevets

(11) **EP 4 542 169 A1**

(12) **EUROPEAN PATENT APPLICATION**

(43) Date of publication:
**23.04.2025 Bulletin 2025/17**

(21) Application number: **23210717.7**

(22) Date of filing: **17.11.2023**

(51) International Patent Classification (IPC):
**G01B 11/25** (2006.01)    **G06T 5/70** (2024.01)
**G06T 7/11** (2017.01)    **G06T 7/521** (2017.01)
**G06V 10/145** (2022.01)    **H04N 13/254** (2018.01)
**H04N 13/271** (2018.01)

(52) Cooperative Patent Classification (CPC):
**G01B 11/2513; G06T 7/521; G06V 10/145**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.10.2023 CN 202311334555**

(71) Applicant: **NXP B.V.**
**5656 AG Eindhoven (NL)**

(72) Inventors:
• **Yu, Tian**
**5656AG Eindhoven (NL)**
• **Wang, Yuebin**
**5656AG Reigate (NL)**
• **Qin, Jianfeng**
**5656AG Eindhoven (NL)**

(74) Representative: **Hardingham, Christopher Mark
NXP Semiconductors
Intellectual Property Group
The Cattle Barn
Upper Ashfield Farm, Hoe Lane
Romsey, Hampshire S051 9NJ (GB)**

(54) **THREE-DIMENSIONAL STRUCTURED LIGHT CAMERA DEVICE HAVING A LIGHT SOURCE AND METHOD THEREFOR**

(57)    A three-dimensional structured light camera device (310) comprises a LUT memory (307) configured to store a reference speckle image of a 3D target object; and a processor (306) configured to: perform object detection on a target speckle image; perform sub-pixel-level, SPL, processing that comprises a plurality of interpolations of the reference speckle image and the target speckle image; perform an adaptive binarization process wherein the adaptive binarization process searches the LUT memory (307) for SPL speckle features of the stored reference speckle image that match SPL speckle features of the SPL target speckle image; find SPL speckle features of the target speckle image that match searched SPL speckle features of the stored reference speckle image; and perform a depth value calculation of the 3D target object in response to the plurality of interpolations and the found SPL speckle features of the target SPL speckle image.

FIG. 9

**Description**

Field of the invention

The field of the invention relates to a three dimensional (3D) structured light camera device having a light source and a method for processing depth information using speckle depth value calculations used for 3D modelling of a target object.

Background

In recent years, three dimensional (3D) structured light cameras have become more popular and are now widely used in various intelligent products, such as mobile phones, robots, smart homes, smart security, vehicles and other fields. A 3D structured light camera is sometimes also referred to as a 'depth camera', which is different from standard cameras. A 3D structured light camera differs from a 3D light camera in that a special speckle pattern is projected onto the object. This kind of speckle pattern is pseudo-random, and each speckle distributed in space has a unique code, which can be used for speckle identification, so as to realize depth ranging. In addition to capturing the two-dimensional picture information, a 3D structured light camera also obtains a third-dimensional distance information, typically through a speckle depth decoding algorithm that can be used for 3D modelling of a target. In this context, a speckle is considered to be a small mark, spot or patch of colour in an image.

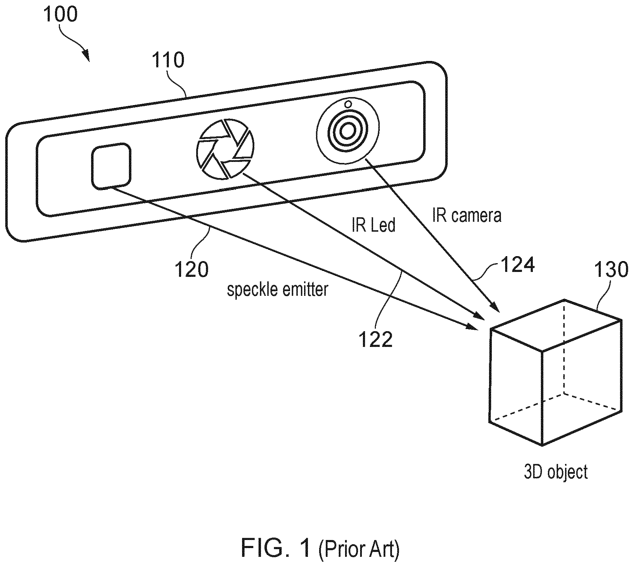

FIG. 1 illustrates a simplified known diagram 100 of a 3D structured light camera 110 arrangement, configured to take a picture of a 3D object 130. The 3D structured light camera 110 includes a speckle emitter 120, an infrared (IR) light emitting diode (LED) 122 and an IR camera 124. The IR camera 124 has only one whole reference speckle image, which is stored in a camera memory by the camera supplier from the beginning. Projecting a narrow band of light onto a three-dimensionally shaped surface produces lines of illumination that appears distorted from other perspectives than that of the projector and can be used for geometric reconstruction of the surface shape. The projection approach typically uses incoherent light and basically works like a video projector. Patterns are usually generated by passing light through, say, a digital spatial light modulator, typically based on one of the three currently most widespread digital projection technologies: transmissive liquid crystal, reflective liquid crystal on silicon (LCOS) or digital light processing (DLP; moving micro mirror) modulators.

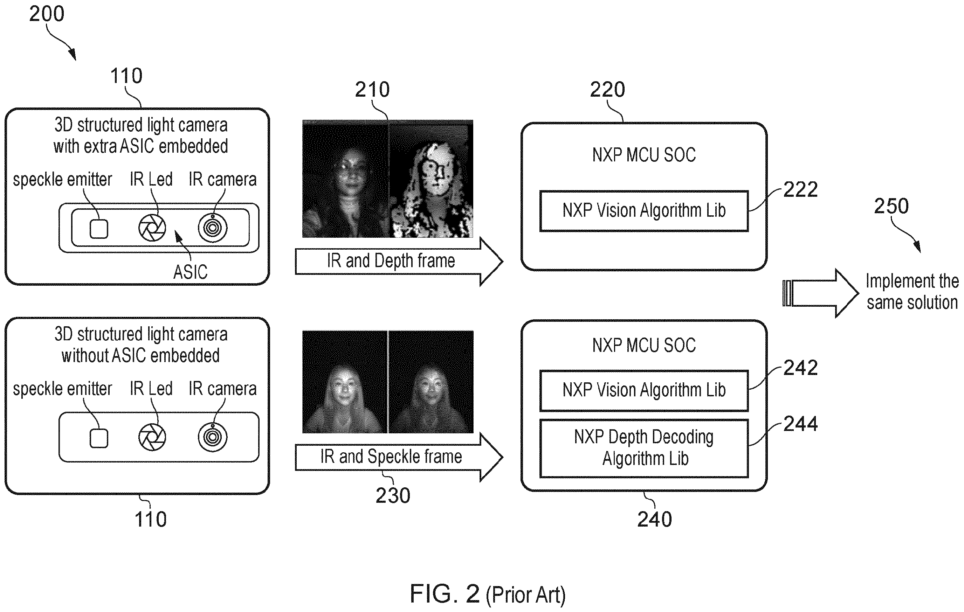

FIG. 2 illustrates a known arrangement 200 provided by module manufacturers that includes an embedded application-specific integrated circuit (ASIC) designed to include a depth decoding algorithm in the camera module. The known arrangement 200 includes a 3D structured light camera 110 with an extra embedded application specific integrated circuit (ASIC) configured to generate an IR and depth frame 210 and a 3D structured light camera 110 without an extra embedded ASIC configured to generate an IR and speckle frame 230. The IR and depth frame 210 is provided to a main computer unit (MCU) system on chip (SOC) 220 that is configured to run a vision algorithm 222 from a library of algorithms. The IR and speckle frame 230 is provided to a main computer unit (MCU) system on chip (SOC) 240 that is configured to run a vision algorithm 242 and a depth decoding algorithm 244 from a library of algorithms. The primary goal of these two paths is to obtain IR and depth images of a target. For the IR and depth frame 210 path (110-210-220), the IR and depth images of a target can be obtained directly through the object detection algorithm of the vision algorithm 222. For the IR and speckle frame 230 path (110-230-240), only the IR and speckle images of the target can be obtained through the object detection algorithm 242, then the process still needs to use the depth decoding algorithm to obtain the target depth image. The known arrangement 200 then provides an output 250 of the IR and depth images of the target, which may be used in many 3D solutions, such as 3D modelling, anti-spoofing, object positioning, volume measurement, AR/VR, etc.

Depth estimation based on a 3D structured light laser speckle camera is an active three-dimensional depth measurement method. It is known that the speckle structure has two characteristics that provide conditions for depth measurement. A first characteristic is that speckle points are with strong autocorrelation and weak correlation, which means each speckle is distinguishable. A second characteristic is that the speckle structure has translation invariance, which means the speckle pattern is moving as a whole at different distances in an ideal speckle structured light system so that the speckle size and distribution will not change along with the distance. Most of the existing depth decoding algorithms make depth estimation of every pixel of each frame indiscriminately. Moreover, these algorithms do not optimize and accelerate the process of speckle matching, so they inherently require/incur a large number of calculations. Hence, module manufacturers embed an application-specific integrated circuit (ASIC) designed specifically to run a depth decoding algorithm within the camera module. However, the extra ASIC leads to problems of high-power consumption and, thus, higher cost of 3D structured light cameras, which discourages customers who prefer to use 3D structured light cameras but where they are sensitive to the price.

A paper authored by Gu Jiawei, Xie Xiaopeng, Cao Yibo, Liu Haoxin, titled 'A Semi-Dense Depth Map Acquisition Algorithm Based on Laser Speckle[J]' and published in the Chinese Journal of Lasers, 2020, 47(3): 0304004 describes a speckle extraction approach that uses local adaptive binarization processing. The present inventors have recognised and appreciated that the approach adopted in this paper proposes to compress memory by sacrificing resolution of speckle image, and consequently the matching accuracy cannot reach pixel-level. Other known technologies impose restrictions on the platforms that are supported. The inventors have recognized and appreciated that it would be useful to design an approach that could be independent of an ASIC architecture and run on a main computer unit (MCU) platform together with in some instances suitable artificial intelligence (AI)/machine language (ML) algorithms to make the approach cost-effective and not restricted on the platforms supported. The inventors have also recognized and appreciated that it would be useful to design an approach that balances accuracy, speed and computing efficiency with regard to memory usage. Accordingly, there is a need for a device having a light source and a method for performing a depth value calculation.

Summary

Examples herein described provide a 3D structured light camera device having a light source and a method for performing a depth value calculation, as described in the accompanying claims. Specific embodiments are set forth in the dependent claims. These and other aspects will be apparent from and elucidated with reference to the embodiments described hereinafter.

Brief description of the drawings

Further details, aspects and embodiments will be described, by way of example only, with reference to the drawings. In the drawings, like reference numbers are used to identify like or functionally similar elements. Elements in the figures are illustrated for simplicity and clarity and have not necessarily been drawn to scale.

FIG. 1 illustrates a simplified known drawing of a 3D structured light camera.

FIG. 2 illustrates a known arrangement provided by module manufacturers that includes an embedded application-specific integrated circuit (ASIC) designed to include a depth decoding algorithm in the camera module.

FIG. 3 illustrates one example of an information flow of a depth value calculation, according to some examples.

FIG. 4 illustrates one example of a high-level flowchart for a depth value calculation, according to some examples.

FIG. 5 illustrates one example image area after local adaptive binarization and an image area after morphological open operation that removes small noise data of binarized image, according to some examples.

FIG. 6 illustrates one example schematic of a speckle matching process, according to some examples.

FIG. 7 illustrates one example of a table representing for a 'number of bits being '1' in an 8-bit binary value', according to some examples.

FIG. 8 illustrates one example of a high-level flowchart of a speckle matching and searching process, according to some examples.

FIG. 9 illustrates one example of exemplary images before and after sub-pixel-level processing according to some examples.

Detailed description

Examples herein described propose a device having a light source and a method for performing a depth value calculation that is highly-efficient and cost-effective, based on infrared speckle images of 3D structured light cameras. One aspect of the proposed approach is configured to adaptively process a target region of interest according to requirements of the depth value calculation, which avoids a large amount of computing resources being wasted on invalid regions or regions where there are no-target frames of interest. It is noted that adaptively processing a target region of interest is a new operation for depth decoding, particularly for application scenarios with specific goals. In some examples, the specific goals may be to process the interested objects of the application, such as a face recognition's goal is to process face, gesture recognition and a tracking goal is to process, say, hand, person detection body, and so on. Examples herein described then propose a local adaptive binarization processing of a reference speckle image and a target speckle image to extract complete and clear speckle features and perform binary encoding compression that provides a saving of computing resources. Thereafter performing a morphological operation on the target speckle image removes noise points, thereby ensuring accuracy when extracting speckle features as the data after noise removal will obtain higher speckle matching accuracy.

Some examples herein described also propose that the memory space required for depth value calculations and processing may be compressed by, say, up to 8 times using binary encoding. Under a premise of ensuring that the accuracy of depth parallax information is not reduced, the speckle matching calculation between the reference speckle image and the target speckle image may be optimized and accelerated by, say, more than 12 times through a use of an efficient search strategy and Look-Up-Table (LUT) method. Some examples herein described also propose, for long-distance objects, Sub-Pixel-Level (SPL) processing, which may be provided to further improve 2 times precision of depth estimation. Finally, in some examples herein described, the actual depth distance value may be calculated according to the speckle projection principle of 3D structured light. In this manner, some examples herein described require no extra embedded chip (e.g., an application specific integrated circuit (ASIC)) that is dedicated specifically for applying a depth decoding algorithm, thereby helping to reduce cost.

In contrast to the teaching during speckle extraction in 'A Semi-Dense Depth Map Acquisition Algorithm Based on Laser Speckle[J]', to only use local adaptive binarization processing, examples herein described adopt morphological operations to remove noise points after local adaptive binarization processing. Furthermore, in contrast to the teaching in 'A Semi-Dense Depth Map Acquisition Algorithm Based on Laser Speckle[J]' to compress memory by sacrificing resolution of speckle image. In contrast, examples herein described adopt a compression and optimization technique that compresses the space by 8 times without loss of any original information or sacrificing speckle image resolution. Examples herein described also optimize the data storage and enables the matching accuracy to reach pixel-level and provides optimization accuracy for long-distance data.

A first aspect herein described provides a three-dimensional, 3D, structured light camera device for performing a depth value calculation comprising an infrared, IR, emitting light source configured to illuminate a 3D target object, a speckle emitter, and an IR camera. A look-up table, LUT, memory is configured to store at least one reference speckle image of the 3D target object; and a processor is operably coupled to the light source and the memory and configured to: perform object detection on a target speckle image; perform sub-pixel-level, SPL, processing that comprises a plurality of interpolations of the reference speckle image and the target speckle image; perform an adaptive binarization process wherein the adaptive binarization process searches the LUT memory for SPL speckle features of the stored reference speckle image that match SPL speckle features of the SPL target speckle image; find SPL speckle features of the target speckle image that match searched SPL speckle features of the stored reference speckle image; and perform a depth value calculation of the 3D target object in response to the plurality of interpolations and the found SPL speckle features of the target SPL speckle image. In this manner, using SPL processing, a 3D structured light camera device is able to compress memory without sacrificing a resolution of the speckle image. Furthermore, the matching accuracy is able to reach sub-pixel-level and provide improved depth decoding accuracy of long-distance targets. Furthermore, module manufacturers may embed an application-specific integrated circuit (ASIC) designed specifically to run a depth decoding algorithm within the camera module with lower power consumption and, thus, lower cost of 3D structured light cameras.

It is envisaged that the interpolations in the SPL may use any known interpolation method. In some examples, a bilinear interpolation approach is adopted in order to improve accuracy. In some examples, the processor being configured to perform the plurality of interpolations of the reference SPL speckle image and the target SPL speckle image may comprise the processor being configured to perform a plurality of bilinear interpolations of the reference SPL speckle image and the target SPL speckle image.

In some examples, the processor may be configured to perform the plurality of interpolations of the reference SPL speckle image and the target SPL speckle image comprises the processor being configured to identify pixel information between two pixels. In some examples, this is a process of deriving the pixel value of a new pixel from the known pixel values within the range of the 'x' and 'y' directions of the pixel. In some examples, the processor may be further configured to identify a 3D target object area of interest of the target SPL speckle image and perform SPL processing that comprises a plurality of interpolations of the reference speckle image and the target SPL speckle image within the identified 3D target object area of interest.

In some examples, the processor may be further configured to perform a morphological operation on the extracted matched speckle features of the target speckle image that generates a noise-reduced target SPL speckle image and perform binary encoding compression on the noise-reduced target SPL speckle image. In some examples, the processor may be configured to perform binary encoding compression on the noise-reduced target SPL speckle image comprises the processor being configured to compress the noise-reduced target SPL speckle image into one byte of image data. In some examples, the processor may be configured to match one byte of SPL speckle features of the target SPL speckle image with searched SPL speckle features of the stored reference SPL speckle image. In particular, examples herein described may perform pre-processing using local adaptive binarization and morphological operations to extract complete and clear speckle features.

In some examples, the processor may be configured to selectively perform SPL processing in response to a determined distance to the 3D target object area of interest. In some examples, the processor may be configured to selectively perform SPL processing in response to a size of the 3D target object area of interest being below a SPL threshold target. In some examples, the SPL threshold target may be application dependent. In this manner, examples herein described may optimize and accelerate the process of speckle matching, with a relatively lower number of calculations, by adaptively extracting an area of interest of the object and then using an efficient search strategy with a Look-Up-Table

In some examples, the processor may be configured to perform object detection on a target SPL speckle image comprises the processor configured to obtain one or more coordinate parameter(s) of a target bounding box from which the processor is configured to adaptively extract the 3D target object area of interest to process. In some examples, the processor may be configured to convert the target SPL speckle image and the reference SPL speckle image from a raw red-green-blue, RGB, SPL speckle image to a single-channel greyscale SPL speckle image with a pixel value range between '0' to '255'. In some examples, the processor may be configured to separate background information and speckle SPL points of the target SPL speckle image. In some examples, the processor may be configured to compare and filter the target SPL speckle image using a threshold that is applied within a set window size.

A second aspect herein described provides a method for performing a depth value calculation. The method comprises: illuminating a three-dimensional, 3D, target object; storing a reference speckle image of the 3D target object performing object detection on a target speckle image; performing sub-pixel-level, SPL, processing that comprises a plurality of interpolations of the reference speckle image and the target speckle image; performing an adaptive binarization process wherein the adaptive binarization process searches the LUT memory for SPL speckle features of the stored reference speckle image that match SPL speckle features of the SPL target speckle image; finding SPL speckle features of the target speckle image that match searched SPL speckle features of the stored reference speckle image; and performing a depth value calculation of the 3D target object in response to the plurality of interpolations and the found SPL speckle features of the target SPL speckle image.

In this manner, an improved way of performing a depth value calculation may be achieved, e.g., requiring less computation, less storage, etc., Thereafter, the depth calculation value may subsequently be used for a range of applications, for example, the depth calculation value can be combined with two-dimensional (2D) information in order to perform 3D modelling. The depth calculation value may be used in the field of face recognition, where a 3D face is not affected by natural lighting. This approach can achieve perfect segmentation even if the foreground and background colours are similar, and its performance under complex head postures is far better than purely using a 2D face. Meanwhile, 3D face recognition is a truly secure face recognition that can effectively avoid security attacks, such as photos/screen pictures, face-changing algorithms, wearing masks/3D face models, etc. Furthermore, it is envisaged that the depth calculation value may be very suitable for anti-spoofing. In addition, it is envisaged that depth values can also be used in a variety of applications, such as intelligent human-computer interaction, three-dimensional reconstruction, and autonomous robot navigation.

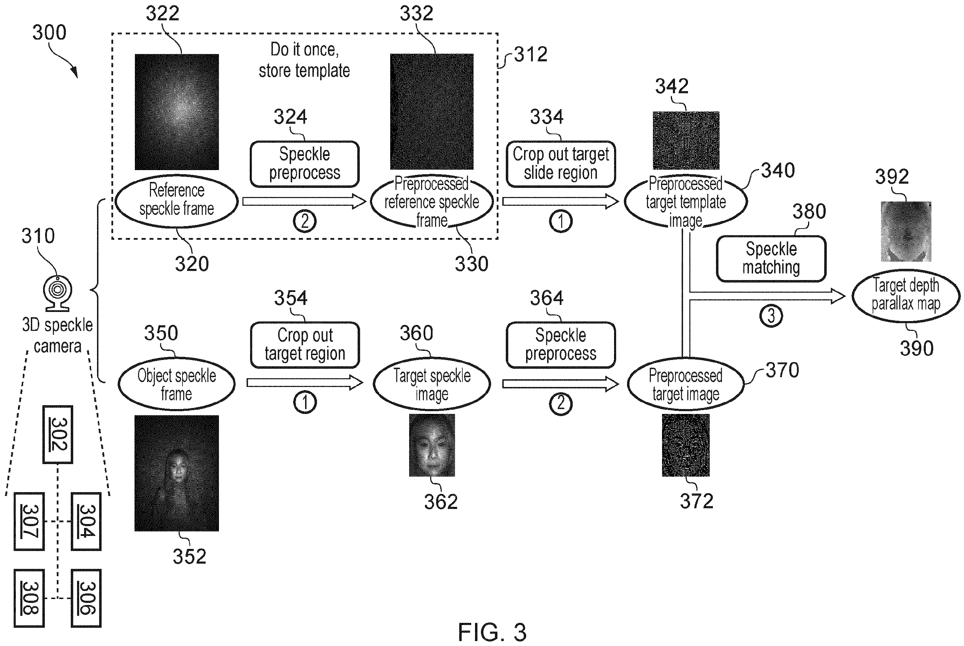

FIG. 3 illustrates one example of speckle structure depth estimation 300 employed by a 3D structured light speckle camera 310, according to some examples. The 3D structured light speckle camera 310 includes a speckle emitter 302, an infrared (IR) light emitting diode (LED) 304, a processor 306, a look-up table (LUT) memory 307 and an IR camera 308. In accordance with some examples, the depth estimation 300 employed by the processor 306 in the 3D structured light speckle camera 310 is configured to adaptively extract and process only an interested (smaller) target area from obtained 3D depth information, in contrast to known depth decoding algorithms that process all depth information that generate depth estimation of every pixel of each frame indiscriminately, irrespective of the computing resources that may be wasted on many invalid regions and no-target frames.

In the depth estimation 300, a first operation is to train 312 the speckle decoding process, for example once, by a processor in the 3D structured light speckle camera 310 referencing a speckle frame 322 at 320. The reference speckle frame is captured based on a white and clean background without a 3D target object. In some examples, the speckle distribution on the reference speckle frame will be used as a standard to be compared with the target speckle frame. If there are 3D objects, the speckle spots of the objects in the target speckle image will be offset relative to the standard. Thereafter, a speckle pre-process operation is performed at 324. Here, the speckle pre-process operation is configured to extract and compress the speckle features, which in some examples includes the operations of one or more of: local adaptive binarization, morphological operation, binary encoding compression, in order to obtain a pre-processed reference speckle frame 332 at 330. Thereafter, at 334, a target slide region of the pre-processed reference speckle frame 332 is cropped out in order to obtain a pre-processed target template image 342 at 340. In a context of examples herein described, a pre-processed target template image encompasses a target-related reference speckle image with speckle feature extraction and binary encoding compression. In a context of examples herein described, a reference speckle frame is provided by a 3D camera supplier, and a reference speckle image encompasses a target-related reference speckle image, which may be cropped from reference speckle frame according to target coordinates.

Once the training operation has been performed, an object speckle frame 352 is received at 350. At 354, a target region of the object speckle frame 352 is extracted/cropped out in order to obtain a target speckle image 362 at 360. At this point, a speckle pre-process operation is performed at 364. As shown in FIG. 3, the reference speckle frame is known from the beginning and will not change, so in some examples it is processed first. If a target is detected, then the target is cropped from the pre-processed reference speckle frame in order to obtain the target-related reference speckle image after preprocessing. Here, in this example, a speckle pre-processing operation is only performed for the object speckle frame, in order to obtain a pre-processed target image 372 at 370. Furthermore, the processor 306 of the IR camera 308 replaces the whole original reference speckle image that is stored in the IR camera 308 memory by the camera supplier with the processed whole reference speckle image after local adaptive binarization, morphological operation and/or binary encoding compression. Thereafter, at 380, a speckle matching process is performed to obtain a target depth parallax map 392 at 390. Thus, flowchart 300 includes two pipelines, a first pipeline is focused on obtaining target-related reference speckle image after preprocessing, and only performing this once for each camera, and a second pipeline is focused on obtaining target object speckle image after preprocessing when the target is detected, then performing speckle matching on them. Speckle matching will help each pixel on the target speckle image to find the matching reference pixel position. Finally, the depth parallax map of a target object may be obtained.

It is envisaged that in some examples the processor 306 may be employed in an integrated circuit for a 3D structured light camera device. Although one example is described with regard to using a training operation to obtain a pre-processed reference speckle frame 332, it is envisaged that in other examples the reference speckle image may be pre-loaded or separately received.

### Adaptively extracting the area of interest

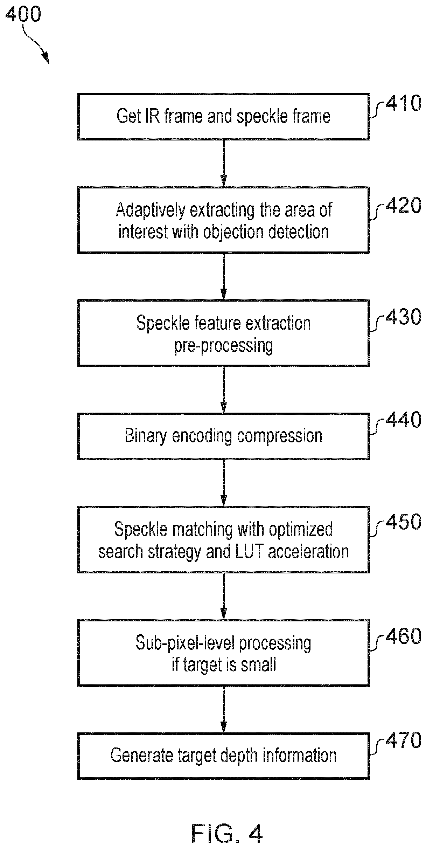

Referring now to FIG. 4, one example of a high-level flowchart for depth estimation/decoding 400 is illustrated, according to some examples. At 410, a processor (such as processor 306 in FIG. 3) obtains or receives an IR frame and a speckle frame, for example in accordance with the operation of the 3D structured light speckle camera 310 in FIG. 3. Depth estimation based on a 3D structured light speckle camera is an active three-dimensional depth measurement method. It is known that the speckle image structure has two characteristics that provide conditions for depth measurement. A first characteristic is that speckle points exhibit both strong autocorrelation and weak correlation, which means each speckle is distinguishable. A second characteristic is that the speckle structure has translation invariance, which means the speckle pattern is moving as a whole at different distances in an ideal speckle structured light system, such that the speckle size and distribution will not change according to the distance.

### Speckle feature extraction pre-processing and binary encoding compression

In accordance with some examples, and since a reference speckle image is pre-stored at 312 of FIG. 3 in one example, its ambient brightness and background information are different from the target speckle images 362 captured in real time. To ensure the matching accuracy of the reference speckle and target speckle, in accordance with examples herein described, the interference information is removed so that a complete and clear speckle feature image can be extracted.

Thus, at 420, the flowchart for depth estimation/decoding 400 then adaptively extracts an area of interest with object detection. In one example, a 3D structured light speckle camera will alternately output the pure infrared image and infrared speckle image projected with a laser speckle. When obtaining the pure infrared image and infrared speckle image, an object detection algorithm may first be employed on the pure infrared image to obtain the coordinates of the target bounding box. In examples herein described, the pure infrared frame is captured by IR camera without projecting a speckle pattern. A laser speckle is the speckle pattern projected by the speckle emitter. For example, a processor (such as processor 306 in FIG. 3) or an algorithm employed by the processor may be configured to provide an input interface of, say, one or more coordinate parameter(s), which can adaptively crop out/extract a region of interest for processing, for example according to any product requirements. Thus, at 430, a speckle feature extraction pre-processing operation is performed, for example, by local adaptive binarization and morphological operations, and binary encoding compression at 440 in order to obtain complete and clear speckle features.

First, in one example of 430 and 440, the original speckle image may be received as, or converted to, greyscale, so that the raw RGB (red-green-blue) speckle image is changed into a single-channel greyscale speckle image with a pixel value range between 0-255. Second, a local adaptive binarization processing approach is adopted to separate the background information and speckle points. In examples herein described, local adaptive binarization encompasses determining a binarization threshold at the pixel position based on the pixel value distribution of the domain block of the pixel. In this manner, it does not matter if the brightness of the entire frame is uneven, as it may be configured to, say, compare and filter by a threshold that is applied within a set window size (see equations [1], [2]):

$$I'(x,y) = \begin{cases} 0, & I(x,y) < T(x,y) \\ 1, & I(x,y) \geq T(x,y) \end{cases} \qquad [1]$$

$$T(x,y) = \frac{1}{(2r+1)^2} \sum_{m=-r}^{r} \sum_{n=-r}^{r} I(x+m, y+n) \qquad [2]$$

Where:

$I(x,y)$ indicates the grey value of any pixel in the original image;
$I'(x,y)$ is the pixel value after local adaptive binarization;
$T(x,y)$ is the local adaptive binarization threshold, which may be obtained by the average value of a plurality of pixels in the window with the grey pixel value $I(x,y)$ as the center and r as the radius.

As indicated by the above equations, the binarization result of each pixel is calculated in the window that is centred on it. Compared with global binarization, the adopted local binarization may also find differences in the window even if this window is too dark or too bright in the whole image, such that speckle features in areas that are too bright or too dark can still be reserved. Consequently, if there are some areas that are deemed too bright or too dark under the influence of the background, their speckle points may still be distinguished from the surrounding environmental pixels in the local range. This processing facilitates an extraction of a complete binarized image of the speckle features.

As each individual speckle point is composed of several pixels connected, the binarized speckle image will inevitably retain some of the brighter and smaller areas of the non-speckle, in which the small areas are considered as ambient noise. Therefore, in accordance with some examples and in order to obtain clean and clear speckles, a morphological open operation is performed, which is a known technique in general image processing but has not been adopted in a depth decoding task until the examples described herein. A known definition of a morphological opening of an image is an erosion followed by a dilation, using the same structuring element for both operations. In some implementations, it is possible to combine dilation and erosion in order to remove/ filter out these ambient noises in a form of small objects from an image and smooth a border of large objects. Thus, in some examples and in accordance with such an erosion and expansion operation, examples herein described set a reasonable kernel size to substantially retain the speckle points (e.g., without significantly changing the size of speckle points) and remove the noise.

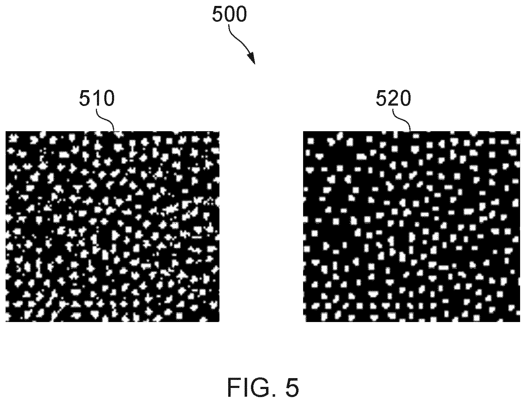

Referring now to FIG. 5, one example of a selected image area 500 is illustrated, with a non-processed image shown at 510 and the pre-processed image 520 shown after local adaptive binarization and after morphological open operation that removes small noise data of binarized image, according to some examples described herein. Currently known techniques do not apply any concept of local adaptive binarization and morphological open operation that removes small noise data of a binarized image. In some examples, a morphological opening of an image layer of a speckle pre-processing operation encompasses the binarized speckle image being eroded and then dilated, so as to filter out these ambient noises without significantly changing the size of speckle points. In known existing depth decoding algorithms, this additional layer of speckle pre-processing is not contemplated. However, the inventors have recognised that a cleaner speckle image, together with a more complete set of data is very important for the accuracy of the subsequent depth decoding.

In this manner, a corresponding infrared speckle image and related matching area on the reference speckle pre-processed image may be cropped out/extracted. Furthermore, in this example, there is neither a need to process a non-target area, nor any need to process each frame when the target is not detected. In some examples, in order to help a depth decoding algorithm focus on a selected area in order to save processing time and memory, the focus on a selected area may be able to significantly reduce power consumption and save computing resources.

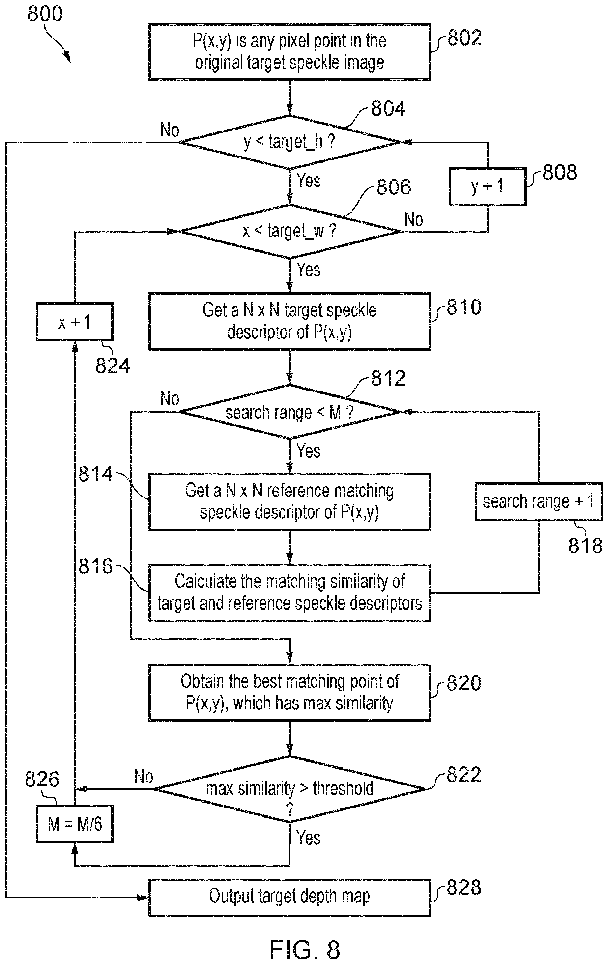

Referring back to FIG. 4, at 450, a speckle matching and optimization acceleration process is employed, for example using an efficient search strategy and Look-Up-Table. In examples herein described, optimization acceleration refers to a use of the LUT for a similarity calculation of speckle features, and the use of effective searching strategy, which adds conditional judgment (see, for example, FIG. 8. at 822, 826). Once the feature has been extracted before speckle matching, the process only needs to find the reference speckle features of a target speckle image having the highest similarity. At 460, in this example, a sub-pixel-level processing is performed, for example in order to improve depth estimation/decoding accuracy of long-distance targets. Thereafter, the target depth information may be generated at 470. The target depth information generated at 470 is sometimes referred to as a depth parallax map, which can be obtained by calculating a row direction translation relationship between an object speckle image and reference speckle image. Thereafter, the actual distance value ('depth information') may be derived through the principle of triangulation, as is known.

In particular, in this manner and in contrast to known approaches, a combination of the binary encoding compression and the efficient speckle matching with the Look-Up-Table searching approach provides a highly-efficient and low-memory-cost algorithm, running on a processor (such as processor 306 in FIG. 3), to obtain accurate target depth information for 3D-related applications. In some examples, the binary encoding compression may be configured to store, say, 8 pixels in 1 byte without losing the information for speckle matching. Meanwhile adopting a Look-Up-Table searching approach may be configured to decrease computation complexity of the matching similarity, particularly when the 8 pixels' worth of information is stored in 1 byte. Otherwise, the processor may be configured to split an 8-bit data into separate bits in order to calculate a matching similarity.

In this manner, examples herein described are able to improve a performance of a processing of speckle images without substantial compression of the memory usage, without needing to incorporate complex computations and avoiding significantly sacrificing the speckle image resolution, as identified in known approaches.

In addition, some examples herein described may also use a characteristic of binary encoding to represent the pixel values of the binarized speckle image obtained above with a '0' or '1', and encodes the value of 8 pixels into an 8-bit integer value. In this manner in some examples, the image, whose original size is Height x Width bytes, requires only Height x Width / 8 bytes of storage. Meanwhile, the subsequent matching similarity calculations can also be processed in parallel with 8 pixels in order to help improve a computing efficiency. It is noted that the example binary encoding approach is different from the approach and goals of known techniques. For example, following local adaptive binarization processing (unlike known techniques), some examples described herein are able to store 8 bits in a byte-limited fashion using the compression and encoding methods. Specifically, the target of known techniques is to represent a single speckle point with a single pixel by extracting the centre of the speckle point. Generally, each speckle point is composed of more than '5' or '6' pixels. Then the known techniques use a convolution process to compress the data storage. Thus, the operation of putting '8' pixels in a byte is not suitable for the compression and encoding methods of known techniques. Furthermore, some known techniques compress the data storage, but concurrently the technique sacrifices resolution of the speckle image so that their matching accuracy cannot reach pixel-level.

Although examples herein described propose to use 8-bit encoding compression, as it not only compresses space without accuracy loss but also provides conditions for acceleration of subsequent speckle matching without accuracy loss, it is envisaged that other bit encoding compression rates could be adopted, albeit that they may be less efficient, e.g., 4-bit or 16-bit. For example, a 4-bit compression would not be as efficient as 8-bit compression, which only compresses four times the memory. Also, a 16-bit compression may also not be an ideal compression scheme for storage, for example leading to a low table lookup efficiency, and/or a LUT also taking up more memory space.

As illustrated in FIG. 5, following the above processing, the original infrared speckle image 510 has been successfully converted into a clean and clear speckle binarized image 520 with an 8-fold smaller memory size. For the reference speckle image, the pre-processing operation is only required in its initialization stage, then it is replaced by the pre-processed reference speckle image. Thereafter, for object speckle images, only the specified target area needs to be processed in order to derive the corresponding depth information. Due to the fact that the reference speckle frame is known from the beginning and will not change, it is possible to process it first. Thereafter, if a target is detected, then in accordance with examples herein described, the process only needs to crop from the pre-processed reference speckle frame in order to obtain the target-related reference speckle image after preprocessing. The object speckle images always changes, so the target speckle needs to be cropped and a speckle pre-process operation performed every time.

**Speckle matching and optimization acceleration**

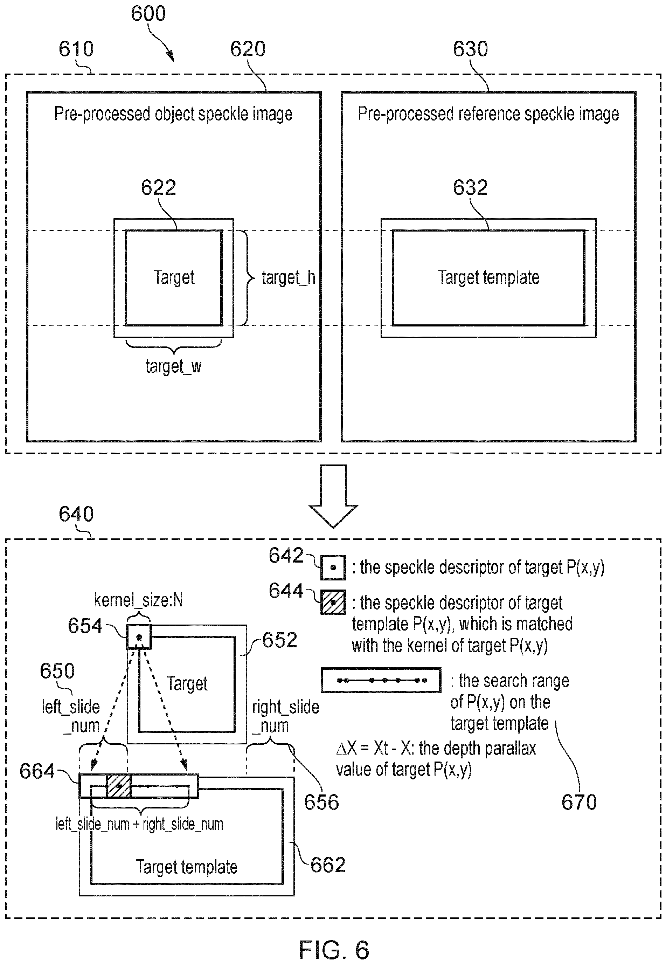

Referring now to FIG. 6, one example schematic of a speckle matching process 600 is illustrated according to some examples. The existing process 610 that uses a pre-processed object speckle image 620 with a target speckle image 622 and a pre-processed reference speckle image 630 with a target template 632 is improved. Once the feature has been extracted before speckle matching, the process only needs to find the reference speckle features of a target speckle image having the highest similarity. In this example an efficient search strategy is employed in order to reduce the matching cost, wherein the search strategy utilizes a Look-Up-Table (LUT) approach in order to accelerate a 'similarity' calculation of speckle matching. Therefore, in this manner, a target speckle image and the reference speckle image after pre-processing may be matched rapidly and accurately. Thereafter, the depth parallax information of the target speckle image can be derived.

It is known that it is currently very difficult to find a matching pixel for each single pixel. Therefore, in order to find a matching pixel for each single pixel, in the example schematic of a speckle matching process 600, an N x N pixel speckle descriptor block 654 is selected and centered around each pixel P (x, y) on the preprocessed target speckle image 652, as the 'target speckle descriptor' 642 to be matched. Similarly, with the same pixel as the center, an N x N pixel target template block 662 is selected on the preprocessed reference speckle image of target region as a 'reference matching speckle descriptor' 664.

Compared with the target speckle image 652, the speckle points in the target speckle descriptor 642 will shift left or right with the change of the measurement distance Therefore, in some examples, a left and right search range 'M' is set, which can be obtained from the distance measurement range. Thereafter, in some examples, the reference matching speckle descriptor 664 will slide left and right in the row direction for a total of 'M' pixels. As result, there would be 'M+1' reference matching speckle blocks for one target speckle descriptor 642.

$$M = left_{slide_{num}} + right_{slide_{num}} \qquad\qquad [3]$$

Where, in the formula in equation [3]:

$M$ is the length of search range of a target speckle descriptor 642;
the *left_slide_num* 650 is the sliding count of the target speckle descriptor 642 searched left on the reference speckle image; and
the *right_slide_num* 656 is the sliding count of the target speckle descriptor 642 searched right on the reference speckle image.

In order to improve the search efficiency of matching, some examples describe an improved, optimized search strategy. Extensive tests performed and statistical analysis of these tests have shown that the optimal matched pixels of two adjacent pixels in the target speckle image tends to be remarkably close together and can be found within the M/6 search range. Therefore, in some examples, a threshold may be set to measure a reliability of speckle matching. In a row direction in this scenario, in one example, when the matching rate of the best matching point is greater than the threshold, it may be assumed that the next target speckle descriptor to be matched may not need to do M+1 matching, but may only need the position of the best matching point of the previous one as a starting point. Thus, in this example, only a range of M/6 pixels is needed for sliding left and right, so the number of matched pixels is M/6+1.

In this manner, the matching cost may be reduced by around six times, thereby significantly improving the matching efficiency.

$$search\ number(x, y) = \begin{cases} M + 1, & \max matching_{rate} < T \\ \frac{M}{6} + 1, & \max matching_{rate} > T \end{cases} \qquad [4]$$

Where, in equation [4]:

T is the threshold for judging whether the best matching result is qualified; and
the *max matching_rate* is the highest matching rate of the speckle.

Next, according to evaluation criteria that may be used, for example depending upon the respective application, a matching between the target speckle descriptors 642, 654 and a plurality of their reference matching speckle descriptors may be used to find the best matching points of target speckle image. In some examples, the Hamming distance may be selected as the similarity criterion between two speckle descriptors. In some examples, the Hamming distance may be selected as it may utilise the binary encoding data and may be calculated using a LUT approach to greatly improve a calculation efficiency. A skilled artisan will readily understand and appreciate that other similarity criterion, such as a cosine distance, may be used for other applications and implementations.

Specifically, in this example, the number of eXclusive OR (XOR) values of the two speckle descriptors is calculated to represent the number of mismatched pixels. According to the results of the Hamming distance, the similarity of the two speckle descriptors can be evaluated by the matching rate, as shown in equation [3], which is:

$$matching\ rate = \frac{s1 + s2 - H}{s1 + s2 + H} \qquad [5]$$

Where, in equation [5]:

H denotes the Hamming distance; and
s1 and s2 are the number of pixel values being "1 in the target speckle descriptor and reference matching speckle descriptor respectively.

As understood and appreciated by a skilled artisan, generally the higher the matching rate, the higher the confidence of the matched speckle descriptors.

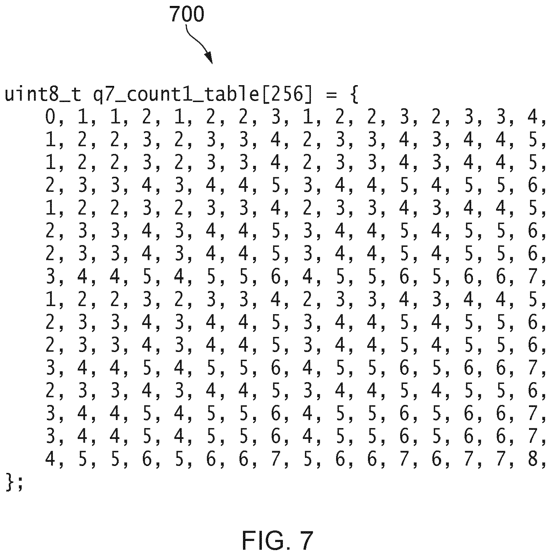

In addition, to speed up the calculation of matching similarity, the Look-Up-Table (LUT) approach described above in some examples may be introduced to compute the Hamming distance efficiently. In this example, the LUT is adopted to speed up Hamming distance calculation, primarily based on the use of binary encoding compression in the speckle feature extraction, noting that there is no current approach that employs binary code compression. Although examples described herein have binary encoded the speckle image and simplified it to only '0' and '1', the amount of computation of Hamming distance is still not small. However, it may be shown that determining the Hamming distance requires a lot of calculations to count how many '1's are in the results. For instance, each match similarity calculation in a circular way requires N x N accumulations. It is known that an 8-bit binary code can describe a maximum of 256 numeric values, whilst the number of bits being '1' in each value cannot be derived directly. Thus, in some examples, a 256-element LUT is introduced to represent all the results of the number of bits being 1 for the 256 numeric values, as shown in FIG. 7, which illustrates one example of a table 700 that may be used to represent a 'number of bits being '1' in an 8-bit binary value', according to some examples. In this manner, the number of loop accumulation decreases from N x N to (N x N) / 8, so that the calculation of matching similarity is eight times faster than that without the introduced LUT approach.

Finally, the transverse difference of the center pixel of the best matching reference speckle descriptor and the center pixel of the target speckle descriptor is the parallax value of the current target pixel to be matched. For a 3D structured light speckle camera/system, it is known that the speckle pattern moves at different distances, and the speckle size and distribution pattern do not change with distance. Therefore, in some examples, a, triangulation principle is adopted to calculate the parallax value to derive the distance value.

Referring now to FIG. 8, one example of a high-level flowchart of a speckle matching and searching process 800 is illustrated, according to some examples. In order to find a matching pixel for each single pixel, each pixel P (x, y) is defined as a respective point on an original preprocessed target speckle image at 802. At 804, a determination is made as to whether 'y' is less than the target height 'h'. If 'y' is not less than the target height 'h' at 804, then the flowchart loops to 828 and the target depth map is output. If 'y' is less than the target height 'h' at 806, then a determination is made as to whether 'x' is less than the target width 'w'. If 'x' is not less than the target width 'x' at 806, then "y' is incremented at 808 and the flowchart loops back to 804.

If 'x' is less than the target width 'x' at 806, then an N x N pixel block of a target speckle descriptor of each pixel P (x, y) is selected at 810. A determination is then made at 812 as to whether a search range is less than 'M'. If the search range is not less than 'M', at 812, the process loops to 820. If the search range is less than 'M', at 812, then an N x N pixel block of a reference matching speckle descriptor of each pixel P (x, y) is selected at 814. At 816, a calculation of the matching similarity of the target speckle descriptor and the reference matching speckle descriptor of a respective pixel P (x, y) is made. The search range is then incremented at 818 and the process loops back to 812.

This process loops until the search range is not less than 'M', at 812, and at 820 the best matching point of a respective pixel P (x, y) that has the maximum similarity is obtained. At 822, a determination is made as to whether the maximum similarity is greater than a threshold. If, at 822, the maximum similarity is not greater than a threshold, the flowchart moves to 824 where 'x' is incremented (as it moves along a row) and the process loops back to 806. Alternatively, if at 822 the maximum similarity is greater than a threshold, M:=M/6 at 826 and the flowchart moves to 824 where 'x' is incremented (as it moves along a row) and the process loops back to 806. Thus, in this example, only a range of M/6 pixels is needed (i.e., for sliding left and right, so the number of matched pixels is M/6+1. In this manner, the matching cost may be reduced by around six times, thereby significantly improving the matching efficiency, as illustrated in equation [4].

### Improve long-distance depth decoding accuracy with sub-pixel-level processing

In some examples, an approach to improve long-distance depth decoding accuracy with sub-pixel-level (SPL) processing may be adopted. In one example, this SPL processing approach may be adaptive and adopted when the target is far from the camera lens. The SPL operation will increase the calculation resource, but the inventors have recognized and appreciated that this operation is not required for every frame. Therefore, in some examples, a threshold may be added to facilitate adaptively using SPL. In some examples, the threshold may be the size of target image, which may be obtained after multiple tests and analysing statistics. In one example, when the target size is smaller than the threshold, the depth information restoration effect may be strengthened by adaptively using SPL. The SPL processing approach is preferably implemented before a speckle feature extraction pre-processing and binary encoding compression operation. In this instance, there would typically be only a small number of speckle points in the interest area, so the depth change will not be noticeable. However, the current speckle matching result is pixel level, which means that if the depth difference of long-distant objects is less than one pixel unit, it will be considered that the depth has not changed. This is because a depth decoding algorithm is naturally related to the distance. For example, without this feature, the depth decoding algorithm may only be able to restore a satisfactory depth map at a distance of, say, 25-60cm. However, when adopting this SPL processing feature, the depth estimation/decoding algorithm may be able to support targets at a further distance of 60-90cm with the same accuracy of depth map.

To improve the depth resolution of the target far from lens, examples described herein provide a SPL processing approach, in which the reference speckle image and the target speckle image before preprocessing are interpolated. In some examples, the reference speckle image and the target speckle image before preprocessing may be interpolated bilinearly. Mathematically, bilinear interpolation is an extension of linear interpolation to an interpolation function with two variables. Hence, the pixel information in the middle of the two pixels can be refined. In some examples, it is envisaged that it is possible to derive the pixel value of a new pixel from the known pixel values within a range of the 'x' and 'y' directions of the pixel.

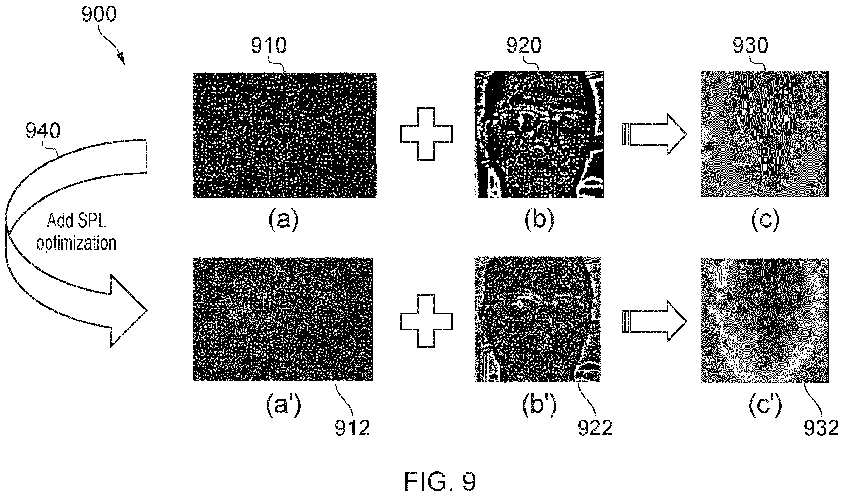

Since some long-distant speckle spots may be lost, it is possible to deduce the lost speckle spot information through interpolation in order to improve accuracy. In this manner, the speckle feature extraction pre-processing and binary encoding compression operation and speckle matching and optimization acceleration approaches are both based on the sub-pixel-level speckle images. In this manner, when performing speckle matching for long-distant objects, it is possible to achieve a depth parallax value with subpixel accuracy; that is, the unit of depth results is 0.5-pixel. To do this in some examples, a threshold of target size may be given to distinguish whether to use sub-pixel-level processing, which is defined according to the actual application scenario and needs. In this example, the threshold may be set as the size of target image, which may be obtained after performing multiple tests to determine the distance of the object and statistics produced therefrom. For example, when the target size is smaller than the threshold, it may be assumed that the depth information restoration effect needs to be strengthened by SPL, as illustrated in FIG. 9

Referring now to FIG. 9, one example of images 900 before and after sub-pixel-level processing 940 is illustrated, according to some examples. Here, the images show: a pre-processed target template 910; a pre-processed target template after SPL optimization 912; a pre-processed target 920; a pre-processed target after SPL optimization 922; a target depth parallax map 930; and a target depth parallax map after SPL optimization 932.

In some examples, it is envisaged that a processor (such as processor 306 in FIG. 3) may perform a local or global adaptive binarization process that searches the LUT memory for speckle features of the stored reference speckle image and match speckle features of the target speckle image with the searched speckle features of the stored reference speckle image when employed in SPL optimization.

**Actual distance value calculation**

After the above processing, the actual depth value can be calculated according to the speckle projection principle of 3D structured light and the principle of triangulation. The formula of the depth calculation can be represented as:

$$D = \frac{HLf}{Lf \pm H\Delta x} \qquad\qquad [6]$$

Where: $\underline{f}$ is the focal length of the camera;

$\underline{H}$ is the distance between the reference plane and the camera;
$\underline{L}$ is the distance between the infrared camera and the speckle projector;
$\Delta \boldsymbol{x}$ is the depth parallax value of the target, which is obtained through above operations; and
$\underline{D}$ is the distance between the target and the camera-speckle projector surface.

In the foregoing specification, examples have been described with reference to specific example implementations. It will, however, be evident that various modifications and changes may be made therein without departing from the scope as set forth in the appended claims and that the claims are not limited to the specific examples described above.

The connections as discussed herein may be any type of connection suitable to transfer signals from or to the respective nodes, units or devices, for example via intermediate devices. Accordingly, unless implied or stated otherwise, the connections may for example be direct connections or indirect connections. The connections may be illustrated or described in reference to being a single connection, a plurality of connections, unidirectional connections, or bidirectional connections. However, different embodiments may vary the implementation of the connections. For example, separate unidirectional connections may be used rather than bidirectional connections and vice versa. Also, plurality of connections may be replaced with a single connection that transfers multiple signals serially or in a time multiplexed manner. Likewise, single connections carrying multiple signals may be separated out into various different connections carrying subsets of these signals. Therefore, many options exist for transferring signals. Those skilled in the art will recognize that the architectures depicted herein are merely exemplary, and that in fact many other architectures can be implemented which achieve the same functionality.

Any arrangement of components to achieve the same functionality is effectively 'associated' such that the desired functionality is achieved. Hence, any two components herein combined to achieve a particular functionality can be seen as 'associated with' each other such that the desired functionality is achieved, irrespective of architectures or intermediary components. Likewise, any two components so associated can also be viewed as being 'operably connected,' or 'operably coupled,' to each other to achieve the desired functionality.

Furthermore, those skilled in the art will recognize that boundaries between the above-described operations merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments. Also, for example, in one embodiment, the illustrated examples may be implemented as circuitry located on a single integrated circuit or within a same device.

In some examples, the various components within the device having a light source for processing depth information circuits can be realized in discrete or integrated component form, with an ultimate structure therefore being an application-specific or design selection. As the illustrated embodiments may, for the most part, be implemented using electronic components and circuits known to those skilled in the art, details will not be explained in any greater extent than that considered necessary as illustrated below, for the understanding and appreciation of the underlying concepts herein described and in order not to obfuscate or distract from the teachings herein. A skilled artisan will appreciate that the level of integration of a device having a light source for processing depth information circuits or components may be, in some instances, implementation-dependent.

Also, for example, the examples, or portions thereof, may implemented as soft or code representations of physical circuitry or of logical representations convertible into physical circuitry, such as in a hardware description language of any appropriate type. Also, the examples herein described are not limited to physical devices or units implemented in non-programmable hardware but can also be applied in programmable devices or units able to perform the desired sampling error and compensation by operating in accordance with suitable program code, such as minicomputers, personal computers, notepads, personal digital assistants, electronic games, automotive and other embedded systems, cell phones and various other wireless devices, commonly denoted in this application as 'computer systems'. However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms 'a' or 'an,' as used herein, are defined as one or more than one. Also, the use of introductory phrases such as 'at least one' and 'one or more' in the claims should not be construed to imply that the introduction of another claim element by the indefinite articles 'a' or 'an' limits any particular claim containing such introduced claim element to inventions containing only one such element, even when the same claim includes the introductory phrases 'one or more' or 'at least one' and indefinite articles such as 'a' or 'an.' The same holds true for the use of definite articles. Unless stated otherwise, terms such as 'first' and 'second' are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

**Claims**

1.  A three-dimensional, 3D, structured light camera device (310) comprising:

    an infrared, IR, emitting light source (304) configured to illuminate a three-dimensional, 3D, target object, a speckle emitter (302), and an IR camera (308);
    a look-up table, LUT, memory (307) configured to store a reference speckle image of the 3D target object; and
    a processor (306) operably coupled to the light source and the LUT memory (307) and configured to:

    perform object detection on a target speckle image;
    perform sub-pixel-level, SPL, processing that comprises a plurality of interpolations of the reference speckle image and the target speckle image;
    perform an adaptive binarization process wherein the adaptive binarization process searches the LUT memory (307) for SPL speckle features of the stored reference speckle image that match SPL speckle features of the SPL target speckle image;
    find SPL speckle features of the target speckle image that match searched SPL speckle features of the stored reference speckle image; and
    perform a depth value calculation of the 3D target object in response to the plurality of interpolations and the found SPL speckle features of the target SPL speckle image.

2.  The 3D structured light camera device (310) of Claim 1 wherein the processor (306) configured to perform the plurality of interpolations of the reference SPL speckle image and the target SPL speckle image comprises the processor (306) being configured to identify pixel information between two pixels.

3.  The 3D structured light camera device (310) of Claim 1 or Claim 2 wherein the processor (306) is further configured to identify a 3D target object area of interest of the target SPL speckle image and perform SPL processing that comprises a plurality of interpolations of the reference speckle image and the target SPL speckle image within the identified 3D target object area of interest.

4. The 3D structured light camera device (310) of any preceding Claim wherein the processor (306) is further configured to perform a morphological operation on the extracted matched speckle features of the target speckle image that generates a noise-reduced target SPL speckle image and perform binary encoding compression on the noise-reduced target SPL speckle image.

5. The 3D structured light camera device (310) of Claim 4 wherein the processor (306) configured to perform binary encoding compression on the noise-reduced target SPL speckle image comprises the processor being configured to compress the noise-reduced target SPL speckle image into at least one byte of image data.

6. The 3D structured light camera device (310) of Claim 5 wherein the processor (306) is configured to match at least one byte of SPL speckle features of the target SPL speckle image with searched SPL speckle features of the stored reference SPL speckle image.

7. The 3D structured light camera device (310) of any preceding Claim wherein the processor (306) is configured to selectively perform SPL processing in response to a determined distance to the 3D target object area of interest.

8. The 3D structured light camera device (310) of Claim 7 wherein the processor (306) is configured to selectively perform SPL processing in response to a size of the 3D target object area of interest being below a SPL threshold target.

9. The 3D structured light camera device (310) of Claim 8, wherein the SPL threshold target is application dependent.

10. The 3D structured light camera device (310) of any preceding Claim wherein the processor (306) configured to perform object detection on a target SPL speckle image comprises the processor (306) configured to obtain one or more coordinate parameter(s) of a target bounding box from which the processor (306) is configured to adaptively extract the 3D target object area of interest to process.

11. The 3D structured light camera device (310) of any preceding Claim wherein the processor (306) is configured to convert the target SPL speckle image and the reference SPL speckle image from a raw red-green-blue, RGB, SPL speckle image to a single-channel greyscale SPL speckle image with a pixel value range between '0' to '255'.

12. The 3D structured light camera device (310) of any preceding Claim wherein the processor (306) being configured to perform local adaptive binarization comprises the processor configured to separate background information and speckle SPL points of the target SPL speckle image.

13. The 3D structured light camera device (310) of Claim 12 wherein the processor (306) being configured to perform local adaptive binarization comprises the processor configured to compare and filter the target SPL speckle image using a threshold that is applied within a set window size.

14. An integrated circuit for a 3D structured light camera device (310), the integrated circuit comprising a processor according to any preceding Claim.

15. A method (900) for performing a depth value calculation, the method comprising:

illuminating a three-dimensional, 3D, target object,
storing a reference speckle image of the 3D target object performing object detection on a target speckle image;
performing sub-pixel-level, SPL, processing that comprises a plurality of interpolations of the reference speckle image and the target speckle image;
performing an adaptive binarization process wherein the adaptive binarization process searches the LUT memory (307) for SPL speckle features of the stored reference speckle image that match SPL speckle features of the SPL target speckle image;
finding SPL speckle features of the target speckle image that match searched SPL speckle features of the stored reference speckle image; and
performing a depth value calculation of the 3D target object in response to the plurality of interpolations and the found SPL speckle features of the target SPL speckle image.

FIG. 1 (Prior Art)

FIG. 2 (Prior Art)

EP 4 542 169 A1

FIG. 3

EP 4 542 169 A1

400

Get IR frame and speckle frame — 410

Adaptively extracting the area of interest with objection detection — 420

Speckle feature extraction pre-processing — 430

Binary encoding compression — 440

Speckle matching with optimized search strategy and LUT acceleration — 450

Sub-pixel-level processing if target is small — 460

Generate target depth information — 470

FIG. 4

FIG. 5

600

610                              620                                          630

Pre-processed object speckle image          Pre-processed reference speckle image

622                                                            632

Target                    target_h          Target template

target_w

640

642      : the speckle descriptor of target P(x,y)

644      : the speckle descriptor of target
         template P(x,y), which is matched
         with the kernel of target P(x,y)

kernel_size:N

654                    652            : the search range
                                        of P(x,y) on the
650                                     target template
left_slide            right_slide
_num        Target    _num         $\Delta X = X_t - X$: the depth parallax
                                   value of target P(x,y)

664                          656                              670

left_slide_num + right_slide_num

Target template            662

FIG. 6

700

```
uint8_t q7_count1_table[256] = {
    0, 1, 1, 2, 1, 2, 2, 3, 1, 2, 2, 3, 2, 3, 3, 4,
    1, 2, 2, 3, 2, 3, 3, 4, 2, 3, 3, 4, 3, 4, 4, 5,
    1, 2, 2, 3, 2, 3, 3, 4, 2, 3, 3, 4, 3, 4, 4, 5,
    2, 3, 3, 4, 3, 4, 4, 5, 3, 4, 4, 5, 4, 5, 5, 6,
    1, 2, 2, 3, 2, 3, 3, 4, 2, 3, 3, 4, 3, 4, 4, 5,
    2, 3, 3, 4, 3, 4, 4, 5, 3, 4, 4, 5, 4, 5, 5, 6,
    2, 3, 3, 4, 3, 4, 4, 5, 3, 4, 4, 5, 4, 5, 5, 6,
    3, 4, 4, 5, 4, 5, 5, 6, 4, 5, 5, 6, 5, 6, 6, 7,
    1, 2, 2, 3, 2, 3, 3, 4, 2, 3, 3, 4, 3, 4, 4, 5,
    2, 3, 3, 4, 3, 4, 4, 5, 3, 4, 4, 5, 4, 5, 5, 6,
    2, 3, 3, 4, 3, 4, 4, 5, 3, 4, 4, 5, 4, 5, 5, 6,
    3, 4, 4, 5, 4, 5, 5, 6, 4, 5, 5, 6, 5, 6, 6, 7,
    2, 3, 3, 4, 3, 4, 4, 5, 3, 4, 4, 5, 4, 5, 5, 6,
    3, 4, 4, 5, 4, 5, 5, 6, 4, 5, 5, 6, 5, 6, 6, 7,
    3, 4, 4, 5, 4, 5, 5, 6, 4, 5, 5, 6, 5, 6, 6, 7,
    4, 5, 5, 6, 5, 6, 6, 7, 5, 6, 6, 7, 6, 7, 7, 8,
};
```

FIG. 7

800

802 — P(x,y) is any pixel point in the original target speckle image

804 — y < target_h ?  — No

Yes

806 — x < target_w ?  — No

808 — y + 1

Yes

810 — Get a N x N target speckle descriptor of P(x,y)

824 — x + 1

812 — search range < M ?  — No

Yes

814 — Get a N x N reference matching speckle descriptor of P(x,y)

818 — search range + 1

816 — Calculate the matching similarity of target and reference speckle descriptors

820 — Obtain the best matching point of P(x,y), which has max similarity

822 — max similarity > threshold ?  — No

826 — M = M/6

Yes

828 — Output target depth map

FIG. 8

FIG. 9

Europäisches
Patentamt

European
Patent Office

Office européen
des brevets

# EUROPEAN SEARCH REPORT

Application Number

EP 23 21 0717

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PAN YU ET AL: "Depth extraction method with subpixel matching for light-coding-based depth camera", IET IMAGE PROCESSING, IET, UK, vol. 12, no. 10, 1 October 2018 (2018-10-01), pages 1703-1712, XP006069560, ISSN: 1751-9659, DOI: 10.1049/IET-IPR.2016.0567 | 1-6, 10-15 | INV.<br>G01B11/25<br>G06T5/70<br>G06T7/11<br>G06T7/521<br>G06V10/145<br>H04N13/254<br>H04N13/271 |
| Y | * figures 1, 4 * | 1-6, 10-15 | |
| A | | 7-9 | |
| | ----- | | |
| Y | GU JIAWEI: "A Semi-Dense Depth Map Acquisition Algorithm Based on Laser Speckle", CHINESE JOURNAL OF LASERS, vol. 47, no. 3, 1 March 2020 (2020-03-01), pages 0304004-1, XP093154693, CN ISSN: 0258-7025, DOI: 10.3788/CJL202047.0304004 Retrieved from the Internet: URL:https://dx.doi.org/10.3788/CJL202047.0304004> * abstract; figures 2, 4 * | 1-6, 10-15 | |
| | ----- | | TECHNICAL FIELDS SEARCHED (IPC) |
| Y | KUN LIU ET AL: "Optimized stereo matching in binocular three-dimensional measurement system using structured light", APPLIED OPTICS, OPTICAL SOCIETY OF AMERICA, WASHINGTON, DC, US, vol. 53, no. 26, 10 September 2014 (2014-09-10), pages 6083-6090, XP001591905, ISSN: 0003-6935, DOI: 10.1364/AO.53.006083 [retrieved on 2014-09-10] * page 6085 - page 6086 * | 1-6, 10-15 | G01B<br>G06V<br>H04N<br>G06T |
| | ----- | | |

The present search report has been drawn up for all claims

| Place of search | Date of completion of the search | Examiner |
|---|---|---|
| Munich | 29 April 2024 | Braun, P |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GU JIAWEI** ; **XIE XIAOPENG** ; **CAO YIBO** ; **LIU HAOXIN**. A Semi-Dense Depth Map Acquisition Algorithm Based on Laser Speckle[J. *Chinese Journal of Lasers*, 2020, vol. 47 (3), 0304004